(19) Europäisches Patentamt
European Patent Office
Office européen des brevets

(11) **EP 4 175 045 B1**

(12) **EUROPEAN PATENT SPECIFICATION**

(45) Date of publication and mention
of the grant of the patent:
**11.10.2023   Bulletin 2023/41**

(21) Application number: **22161999.2**

(22) Date of filing: **14.03.2022**

(51) International Patent Classification (IPC):
*H01M 50/403* [(2021.01)]   *H01M 50/42* [(2021.01)]
*H01M 50/434* [(2021.01)]   *H01M 50/449* [(2021.01)]

(52) Cooperative Patent Classification (CPC):
**H01M 50/403; H01M 50/42; H01M 50/434;
H01M 50/449;** Y02E 60/10

(54) **COATED SEPARATOR WITH HIGH HEAT RESISTANCE AND HIGH PEEL STRENGTH AND PREPARATION METHOD THEREOF**

BESCHICHTETER SEPARATOR MIT HOHER HITZEBESTÄNDIGKEIT UND HOHER SCHÄLFESTIGKEIT UND VERFAHREN ZU SEINER HERSTELLUNG

SÉPARATEUR REVÊTU À HAUTE RÉSISTANCE THERMIQUE ET À HAUTE RÉSISTANCE AU PELAGE ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2021   CN 202111265748**

(43) Date of publication of application:
**03.05.2023   Bulletin 2023/18**

(73) Proprietor: **Jiangsu Horizon New Energy Tech Co.,
Ltd
Jintan District
Changzhou
Jiangsu 213000 (CN)**

(72) Inventors:
• **ZHANG, Xuehu**
**Changzhou, Xuehu (CN)**
• **ZHANG, Libin**
**Changzhou, 213000 (CN)**
• **SHEN, Yading**
**Changzhou, 213000 (CN)**

(74) Representative: **Bayramoglu et al.
Mira Office
Kanuni Sultan Süleyman Boulevard 5387
Street Beytepe, floor 12, no:50
06800 Cankaya, Ankara (TR)**

(56) References cited:
**CN-A- 108 807 805     CN-A- 111 312 967
CN-A- 113 611 984**

## Description

## TECHNICAL FIELD

The present invention relates to the technical field of battery separators, and in particular to a coated separator with high heat resistance and high peel strength and a preparation method thereof.

## BACKGROUND

The lithium ion battery consists of four main functional components, namely a cathode, an anode, an electrolyte solution, and a separator. The separator primarily functions to provide a physical barrier between the electrodes to prevent a short circuit and also provides a transport channel for lithium ions. At present, microporous polyolefin membranes are now widely used in most commercial lithium ion batteries because of their overall performance and cost advantages. However, the melting point of the polyolefin separator is mostly 80-120 °C. Under a high-temperature condition, severe heat shrinkage will occur, which causes a short circuit in the cathode and anode of the battery, so that the battery is easy to ignite, thereby resulting in a safety problem.

At present, the conventional means for improving the heat resistance of the separator is coating. The base membrane is coated with a ceramic coating layer, so that the heat shrinkage resistance of the material can be improved, and the mechanical property of the separator can be improved. However, the heat shrinkage performance of a current commercial coated separator can only be less than or equal to 3% at 150 °C/1 h, which cannot meet the requirement of the battery on safety. The ability of the coated separator to resist the heat shrinkage is closely related to the binder in the ceramic slurry, the thickness of the coating layer, the base membrane, coating on one side or both sides. Because of the requirement on the energy density, the separator is designed to be lighter and thinner, so that the coating layer and the base membrane are as thin as possible, and one side is coated to achieve the effect as far as possible. Therefore, on the premise of being thinner and lighter, in view of a slurry binder, a binder with high glass transition temperature can be selected. However, the binder with high glass transition temperature has the defect of poor bonding force, and the coating layer is easy to fall off in a battery cycle process due to the poor bonding force, so that the mechanical strength is reduced, and the safety problem is caused.

Chinese patent No. CN106025149A discloses a high-temperature-resistant composite lithium battery separator and a preparation method thereof, which has heat shrinkage of 3.2 in an MD direction and heat shrinkage of 0.5 in a TD direction under test conditions of 150 °C, 0.5 h. It is a conventional technical level at present, and cannot meet the technical requirements of the increasing development. Chinese patent No. CN108467503B discloses a preparation method for a heat-resistant lithium battery separator, which solves the problems of poor heat resistance at 140 °C and poor bonding force, but the ceramic coating layer reaches 4-6 microns, which is not beneficial to reducing the energy density of the battery, and the heat resistance at 140 °C or above and the peel strength performance are not reported. Chinese patent No. CN111682149A discloses a lithium ion battery separator and a lithium ion battery. A surface of a base membrane is coated with a heat-resistant coating layer. The heat shrinkage resistance is achieved by utilizing the inhibition effect of the coating layer on the shrinkage of the base membrane. However, the heat shrinkage performance is improved only under test conditions of 130 °C, 1 h, and the heat shrinkage performance and the peel performance at higher temperature are not reported. Chinese patent No. CN1 12467307A discloses a lithium ion battery ceramic separator and a preparation method thereof. The separator has excellent peel performance and heat shrinkage resistance at 150 °C/1 h, but the test on the heat shrinkage performance test at 150 °C has also been the conventional technical level, and a coated separator capable of resisting higher temperature is still needed.

CN111312967A discloses a lithium battery separator, which uses a ceramic coating slurry, wherein the ceramic coating slurry comprises 30-50 parts of alkaline ceramic nanoparticles, 0.01-0.05 parts of thickener, 2-15 parts of binder, 0.5-3 parts of dispersant, 0.1-2 parts of wetting agent, 30-80 parts of water. The binder is one or a mixture of polyvinyl alcohol, polyvinyl butyral, acrylic acid and styrene butadiene rubber in any ratio. The ceramic coating slurry provided therein reduces the amount of thickener, and its use amount is only one-fifth of the mainstream formulation, so that the lithium battery separator formed after it is coated on the base film has air permeability and shrinkage rate is decreased, the peel strength and withstand voltage of the coating film increase, which improves the performance of the lithium battery separator as a whole, and also reduces the side reactions after the lithium battery separator is applied to the lithium battery, and improves the capacity retention rate and cycle life of the lithium battery. CN108807805 discloses a battery separator comprising a base film and a hydrophobic ceramic separator coated on at least one surface of the base film, wherein the coating comprises 35 to 70 parts of alumina, 0.3 to 1 part of dispersant, 2 to 5 parts of binder, 0.1 to 0.5 parts of wetting agent, 0.1 to 0.5 parts of organic water repellent, and 23 to 62.5 parts of water, the dispersing agent may be selected from the group consisting of polyethylene glycol, sodium polyacrylate, polyvinylpyrrolidone or a combination of sever and the binder may be selected from the group consisting of polyvinylidene fluoride, polytetrafluoroethylene, styrene butadiene rubber, polyacrylic acid, or a combination of several. D2 controls the water content of the ceramic separator to be within 800 ppm, thereby reducing the production cost of the lithium battery. In conclusion, it is a technical difficulty in the art to develop a thinner coated separator with better heat shrinkage resistance and higher peel strength.

**SUMMARY**

The present invention aims to provide a coated separator with high heat resistance and high peel strength and a preparation method thereof, so as to solve the problems in the background.

In order to solve the technical problems, the present invention provides the following technical solutions: a coated separator with high heat resistance and high peel strength and a preparation method thereof.

The coated separator with high heat resistance and high peel strength comprises a base membrane, and a surface of the base membrane is coated with a ceramic coating layer.

Further, the ceramic coating layer comprises the following raw materials in parts by weight: 30-50 parts of ceramic powder, 0.5-2 parts of a dispersant, 3-7 parts of a prefabricated binder, 0.1-0.5 parts of a wetting agent, and 20-30 parts of high-purity water.

The prefabricated binder is a mixture of modified acrylic resin and poly alpha-methyl cyanoacrylate;
the modified acrylic resin is mainly prepared from 2-aminopyrimidine, vanillin, an acrylic monomer, acrylic ester, *o*-bromoacetophenone, and dimethyl azodiisobutyrate through reactions.

A mass ratio of the modified acrylic resin to the poly alpha-methyl cyanoacrylate is 1: 0.5-1.

Further, the dispersant is an aqueous polycarboxylate ammonium salt type dispersant, an acrylate copolymer type dispersant and a triethanolamine type dispersant;

the ceramic powder is any one of aluminum oxide powder, boehmite powder, silicon dioxide powder and titanium dioxide powder;
the wetting agent is one or a mixture of two of a polyether organic silicon copolymer surfactant and an alkyne diol modified nonionic surfactant.

Further, the base membrane is a polyethylene membrane or a polypropylene membrane, which has a thickness of 5-9 μm and a porosity of 40-50%.

Further, the preparation method for the coated separator comprises the following steps:

(1) preparing a prefabricated binder:

S1, preparing modified propylene resin; dissolving 2-aminopyrimidine in an *N,N*-dimethylformamide solvent; adding *o*-bromoacetophenone; mixing and uniformly stirring the materials; adding sodium bicarbonate under a nitrogen atmosphere; uniformly stirring the materials; heating the mixture to 70-75 °C for reaction, and heating the mixture to 75-80 °C for heat preservation and aging; cooling the mixture; adding a cupric iodide catalyst and ammonia water, and heating the mixture to 80-90 °C for reaction; cooling the mixture; adding vanillin; heating the mixture to 75-80 °C for continuous reaction; performing cooling, extracting with ethyl acetate, washing, concentrating and separating to obtain a compound containing pyrimidine heterocycle;
S2, mixing the compound prepared in S1, an acrylic acid monomer, acrylic ester, deionized water and concentrated sulfuric acid; adding dimethyl azodiisobutyrate at a low temperature; uniformly stirring the materials; heating the mixture to 75-85 °C for reaction; continuing to heat the mixture to 85-90 °C for heat preservation and aging; cooling the mixture; dropwise adding ammonia water to adjust the pH value to obtain modified acrylic resin; and
S3, mixing the modified acrylic resin with poly alpha-methyl cyanoacrylate, and uniformly stirring the mixture to obtain a prefabricated binder;

(2) preparing a ceramic slurry: mixing and stirring a dispersant, high-purity water, ceramic powder, the prefabricated binder and a wetting agent to prepare a ceramic slurry; and
(3) preparing a finished coated separator product with high heat resistance and high peel strength: coating a surface of a base membrane with the ceramic slurry by a roller; drying the surface in an oven; and rolling up, splitting and packaging the base membrane to obtain a finished coated separator product.

Further, the preparation method for a coated separator with high heat resistance and high peel strength comprises the following steps:

(1) preparing a prefabricated binder:

S1, preparing modified propylene resin; dissolving 2-aminopyrimidine in an *N,N*-dimethylformamide solvent; adding *o*-bromoacetophenone; mixing and uniformly stirring the materials; adding sodium bicarbonate under a nitrogen atmosphere; uniformly stirring the materials; heating the mixture to 70-75 °C for reaction for 3-4 h; performing vacuum removal for 10-20 min under a condition that a vacuum degree is less than or equal to -0.095 mPa; heating the mixture to 75-80 °C for heat preservation and aging for 1-2 h; cooling the mixture to 30-40 °C; adding a cupric iodide catalyst and ammonia water, and heating the mixture to 80-90 °C for reaction for 8-9 h; cooling the mixture to 30-40 °C; adjusting the pH to 4.3-4.7; adding vanillin; heating the mixture to 75-80 °C for continuous reaction for 5-6 h; performing cooling to 30-40 °C; performing extracting with ethyl acetate; performing washing, concentrating and separating to obtain a compound containing pyrimidine heterocycle;

S2, mixing the compound prepared in S1, an acrylic acid monomer, acrylic ester, deionized water and concentrated sulfuric acid; cooling the mixture to 5-10 °C; adding dimethyl azodiisobutyrate; uniformly stirring the materials; heating the mixture to 75-85 °C for reaction for 3-4 h; continuing to heat the mixture to 85-90 °C for heat preservation and aging for 30-40 min; cooling the mixture to 30-40 °C; dropwise adding ammonia water to adjust the pH value to 6.8-7.2 to obtain modified acrylic resin; and

S3, mixing the modified acrylic resin with poly alpha-methyl cyanoacrylate according to a mass ratio of 1: 0.5-1, and uniformly stirring the mixture to obtain a prefabricated binder;

(2) preparing a ceramic slurry: adding 0.5-2 parts of a dispersant to high-purity water, and stirring the materials for 5-10 min; adding 30-50 parts of ceramic powder, and stirring the materials for 30-40 min; adding 3-7 parts of the prefabricated binder, and stirring the materials for 1-1.5 h; adding 0.1-0.5 parts of a wetting agent, and stirring the materials for 30-40 min to prepare a ceramic slurry; and

(3) preparing a finished coated separator product with high heat resistance and high peel strength: coating a surface of a base membrane with the ceramic slurry prepared in step (2) by a 170 to 360-wire anilox roller; drying the surface in an oven; and rolling up, splitting and packaging the base membrane to obtain a finished coated separator product.

Compared with the prior art, the present invention has the following beneficial effects.

1. The present invention provides a binder with excellent performance, which is obtained by compounding the modified acrylic resin with the poly alpha-methyl cyanoacrylate in the mass ratio of 1: 0.5-1. The poly alpha-methyl cyanoacrylate is an instant binder which has high curing speed and high bonding force, but has poor vitrification. In order to increase the glass transition temperature of the binder and improve the heat resistance of a coated separator, the modified acrylic resin containing the pyrimidine heterocycle and the poly alpha-methyl cyanoacrylate are compounded to serve as the prefabricated binder, and the binder is endowed with more excellent performance. In the present invention, the modified acrylic resin is mainly prepared by carrying out multi-step chemical reactions on 2-aminopyrimidine, vanillin, an acrylic monomer, acrylic ester, o-bromoacetophenone and dimethyl azodiisobutyrate. The acrylic resin contains a pyrimidine ring and a nitrogen-containing heterocycle, so that the glass transition temperature of the coating layer is greatly increased, and the heat shrinkage resistance of the battery separator is improved; and meanwhile, a rigid annular structure in a molecule of the acrylic resin can increase the bonding force between the ceramic coating layer and the base membrane.

2. In the present invention, in the process of preparing the modified acrylic resin, the vanillin is used as a reaction substrate, so that on the one hand, the generation of the pyrimidine heterocycle is promoted, and on the other hand, hydroxyl on the surface of the vanillin can react with the free acrylic monomer which does not participate in the reaction in a system, so that a decrease in the bonding force between the binder and the base membrane caused by the existence of the acrylic monomer is avoided.

3. Compared with the existing coated separator, the coated separator prepared in the present invention has a thinner coating layer which can be as thin as 2 $\mu$m, and has more excellent heat shrinkage resistance and good heat resistance, and due to the peel strength of the coating layer, the battery life and safety performance of a battery separator are greatly improved.

## DETAILED DESCRIPTION

The technical solutions in the examples of the present invention will be clearly and completely described below. Apparently, the described examples are only a part of the examples of the present invention, rather than all the examples. Based on the examples in the present invention, all other examples obtained by those of ordinary skill in the art without creative work shall fall within the protection scope of the present invention.

**Example 1**

A preparation method for a coated separator with high heat resistance and high peel strength comprises the following steps:

(1) preparing a prefabricated binder:

S1, modified propylene resin was prepared; 2-aminopyrimidine was dissolved in an *N,N*-dimethylformamide solvent; o-bromoacetophenone was added; the materials were mixed and uniformly stirred; sodium bicarbonate was added under a nitrogen atmosphere; the materials were uniformly stirred; the mixture was heated to 70 °C for reaction for 3 h; vacuum removal was performed for 10 min under a condition that the vacuum degree was less than or equal to -0.095 mPa; the mixture was heated to 75 °C for heat preservation and aging for 1 h; the mixture was cooled to 30 °C; a cupric iodide catalyst and ammonia water were added, and the mixture was heated to 80 °C for reaction for 8 h; the mixture was cooled to 30 °C; the pH was adjusted to 4.3; vanillin was added; the mixture was heated to 75 °C for continuous reaction for 5 h; cooling was performed to 30 °C; extracting was performed with ethyl acetate; washing, concentrating and separating were performed to obtain a compound containing pyrimidine heterocycle;
S2, the compound prepared in S1, an acrylic acid monomer, acrylic ester, deionized water and concentrated sulfuric acid were mixed; the mixture was cooled to 5 °C; dimethyl azodiisobutyrate was added; the materials were uniformly stirred; the mixture was heated to 75 °C for reaction for 3 h; the mixture was continued to be heated to 85 °C for heat preservation and aging for 30 min; the mixture was cooled to 30 °C; ammonia water was dropwise added to adjust the pH value to 6.8 to obtain modified acrylic resin; and
S3, the modified acrylic resin was mixed with poly alpha-methyl cyanoacrylate according to a mass ratio of 1: 0.8, and the mixture was uniformly stirred to obtain a prefabricated binder;

(2) a ceramic slurry was prepared: 0.5 parts of a dispersant was added to high-purity water, and the materials were stirred for 5 min; 30 parts of ceramic powder was added, and the materials were stirred for 30 min; 3 parts of the prefabricated binder was added, and the materials were stirred for 1 h; 0.1 parts of a wetting agent was added, and the materials were stirred for 30 min to prepare a ceramic slurry; and
(3) a finished coated separator product with high heat resistance and high peel strength was prepared: a surface of a polyethylene base membrane was coated with the ceramic slurry prepared in step (3) by a 170 to 360-wire anilox roller; the surface was dried in an oven; and the base membrane was rolled up, split and packaged to obtain a finished coated separator product.

In this example, the ceramic coating layer comprised the following raw materials in parts by weight: 30 parts of ceramic powder, 0.5 parts of a dispersant, 3 parts of a prefabricated binder, 0.1 parts of a wetting agent, and 20 parts of high-purity water. The ceramic coating layer had a thickness of 2 $\mu$m.

**Example 2**

A preparation method for a coated separator with high heat resistance and high peel strength comprises the following steps:

(1) preparing a prefabricated binder:

S1, modified propylene resin was prepared; 2-aminopyrimidine was dissolved in an N,N-dimethylformamide solvent; o-bromoacetophenone was added; the materials were mixed and uniformly stirred; sodium bicarbonate was added under a nitrogen atmosphere; the materials were uniformly stirred; the mixture was heated to 72 °C for reaction for 3.5 h; vacuum removal was performed for 15 min under a condition that the vacuum degree was less than or equal to -0.095 mPa; the mixture was heated to 77 °C for heat preservation and aging for 1.5 h; the mixture was cooled to 35 °C; a cupric iodide catalyst and ammonia water were added, and the mixture was heated to 85 °C for reaction for 8.5 h; the mixture was cooled to 35 °C; the pH was adjusted to 4.5; vanillin was added; the mixture was heated to 77 °C for continuous reaction for 5.5 h; cooling was performed to 35 °C; extracting was performed with ethyl acetate; washing, concentrating and separating were performed to obtain a compound containing pyrimidine heterocycle;
S2, the compound prepared in S1, an acrylic acid monomer, acrylic ester, deionized water and concentrated sulfuric acid were mixed; the mixture was cooled to 7 °C; dimethyl azodiisobutyrate was added; the materials were uniformly stirred; the mixture was heated to 80 °C for reaction for 3.5 h; the mixture was continued to be heated to 87 °C for heat preservation and aging for 35 min; the mixture was cooled to 35 °C; ammonia water was dropwise added to adjust the pH value to 7.0 to obtain modified acrylic resin; and
S3, the modified acrylic resin was mixed with poly alpha-methyl cyanoacrylate according to a mass ratio of 1: 0.9, and the mixture was uniformly stirred to obtain a prefabricated binder;

(2) a ceramic slurry was prepared: 1 part of a dispersant was added to high-purity water, and the materials were stirred for 7 min; 42 parts of ceramic powder was added, and the materials were stirred for 35 min; 5 parts of the prefabricated binder was added, and the materials were stirred for 1 h; 0.3 parts of a wetting agent was added, and the materials were stirred for 35 min to prepare a ceramic slurry; and
(3) a finished coated separator product with high heat resistance and high peel strength was prepared: a surface of a polyethylene base membrane was coated with the ceramic slurry prepared in step (3) by a 170 to 360-wire anilox roller; the surface was dried in an oven; and the base membrane was rolled up, split and packaged to obtain a finished coated separator product.

In this example, the ceramic coating layer comprised the following raw materials in parts by weight: 40 parts of ceramic powder, 1 part of a dispersant, 5 parts of a prefabricated binder, 0.3 parts of a wetting agent, and 25 parts of high-purity water. The ceramic coating layer had a thickness of 2 $\mu$m.

**Example 3**

A preparation method for a coated separator with high heat resistance and high peel strength comprises the following steps:

(1) preparing a prefabricated binder:

S1, modified propylene resin was prepared; 2-aminopyrimidine was dissolved in an *N,N*-dimethylformamide solvent; *o*-bromoacetophenone was added; the materials were mixed and uniformly stirred; sodium bicarbonate was added under a nitrogen atmosphere; the materials were uniformly stirred; the mixture was heated to 75 °C for reaction for 4 h; vacuum removal was performed for 20 min under a condition that the vacuum degree was less than or equal to -0.095 mPa; the mixture was heated to 80 °C for heat preservation and aging for 2 h; the mixture was cooled to 40 °C; a cupric iodide catalyst and ammonia water were added, and the mixture was heated to 90 °C for reaction for 9 h; the mixture was cooled to 40 °C; the pH was adjusted to 4.7; vanillin was added; the mixture was heated to 80 °C for continuous reaction for 6 h; cooling was performed to 40 °C; extracting was performed with ethyl acetate; washing, concentrating and separating were performed to obtain a compound containing pyrimidine heterocycle;
S2, the compound prepared in S1, an acrylic acid monomer, acrylic ester, deionized water and concentrated sulfuric acid were mixed; the mixture was cooled to 5-10 °C; dimethyl azodiisobutyrate was added; the materials were uniformly stirred; the mixture was heated to 85 °C for reaction for 4 h; the mixture was continued to be heated to 90 °C for heat preservation and aging for 40 min; the mixture was cooled to 40 °C; ammonia water was dropwise added to adjust the pH value to 7.2 to obtain modified acrylic resin; and
S3, the modified acrylic resin was mixed with poly alpha-methyl cyanoacrylate according to a mass ratio of 1: 1, and the mixture was uniformly stirred to obtain a prefabricated binder;

(2) a ceramic slurry was prepared: 2 parts of a dispersant was added to high-purity water, and the materials were stirred for 10 min; 50 parts of ceramic powder was added, and the materials were stirred for 40 min; 7 parts of the prefabricated binder was added, and the materials were stirred for 1.5 h; 0.5 parts of a wetting agent was added, and the materials were stirred for 40 min to prepare a ceramic slurry; and
(3) a finished coated separator product with high heat resistance and high peel strength was prepared: a surface of a polyethylene base membrane was coated with the ceramic slurry prepared in step (3) by a 170 to 360-wire anilox roller; the surface was dried in an oven; and the base membrane was rolled up, split and packaged to obtain a finished coated separator product.

In this example, the ceramic coating layer comprised the following raw materials in parts by weight: 50 parts of ceramic powder, 2 part of a dispersant, 7 parts of a prefabricated binder, 0.5 parts of a wetting agent, and 30 parts of high-purity water. The ceramic coating layer had a thickness of 2 $\mu$m.

**Comparative Example 1**

A preparation method for a coated separator with high heat resistance and high peel strength comprises the following steps:

(1) preparing a prefabricated binder:

S1, modified propylene resin was prepared; 2-aminopyrimidine was dissolved in an *N,N*-dimethylformamide solvent; *o*-bromoacetophenone was added; the materials were mixed and uniformly stirred; sodium bicarbonate was added under a nitrogen atmosphere; the materials were uniformly stirred; the mixture was heated to 72 °C for reaction for 3.5 h; vacuum removal was performed for 15 min under a condition that the vacuum degree was less than or equal to -0.095 mPa; the mixture was heated to 77 °C for heat preservation and aging for 1.5 h; the mixture was cooled to 35 °C; a cupric iodide catalyst and ammonia water were added, and the mixture was heated to 85 °C for reaction for 8.5 h; the mixture was cooled to 35 °C; the pH was adjusted to 4.5; vanillin was added; the mixture was heated to 77 °C for continuous reaction for 5.5 h; cooling was performed to 35 °C; extracting was performed with ethyl acetate; washing, concentrating and separating were performed to obtain a compound containing pyrimidine heterocycle;
S2, the compound prepared in S1, an acrylic acid monomer, acrylic ester, deionized water and concentrated sulfuric acid were mixed; the mixture was cooled to 7 °C; dimethyl azodiisobutyrate was added; the materials were uniformly stirred; the mixture was heated to 80 °C for reaction for 3.5 h; the mixture was continued to be heated to 87 °C for heat preservation and aging for 35 min; the mixture was cooled to 35 °C; ammonia water was dropwise added to adjust the pH value to 7.0 to obtain a prefabricated binder;
steps (2) and (3) were the same as in Example 2, but no poly alpha-methyl cyanoacrylate was added.

**Comparative Example 2**

A preparation method for a coated separator with high heat resistance and high peel strength comprises the following steps:

(1) preparing a prefabricated binder:

S1, modified propylene resin was prepared; 2-aminopyrimidine was dissolved in an *N,N*-dimethylformamide solvent; o-bromoacetophenone was added; the materials were mixed and uniformly stirred; sodium bicarbonate was added under a nitrogen atmosphere; the materials were uniformly stirred; the mixture was heated to 72 °C for reaction for 3.5 h; vacuum removal was performed for 15 min under a condition that the vacuum degree was less than or equal to -0.095 mPa; the mixture was heated to 77 °C for heat preservation and aging for 1.5 h; the mixture was cooled to 35 °C; a cupric iodide catalyst and ammonia water were added, and the mixture was heated to 85 °C for reaction for 8.5 h; the mixture was cooled to 35 °C; the pH was adjusted to 4.5; butyraldehyde was added; the mixture was heated to 77 °C for continuous reaction for 5.5 h; cooling was performed to 35 °C; extracting was performed with ethyl acetate; washing, concentrating and separating were performed to obtain a compound containing pyrimidine heterocycle;
S2, the compound prepared in S1, an acrylic acid monomer, acrylic ester, deionized water and concentrated sulfuric acid were mixed; the mixture was cooled to 7 °C; dimethyl azodiisobutyrate was added; the materials were uniformly stirred; the mixture was heated to 80 °C for reaction for 3.5 h; the mixture was continued to be heated to 87 °C for heat preservation and aging for 35 min; the mixture was cooled to 35 °C; ammonia water was dropwise added to adjust the pH value to 7.0 to obtain a prefabricated binder; and
S3, mixing the modified acrylic resin with poly alpha-methyl cyanoacrylate according to a mass ratio of 1: 0.5, and uniformly stirring the mixture to obtain a prefabricated binder.

Compared with Example 2, when the prefabricated binder was prepared, the butyraldehyde was adopted to replace the vanillin, and the rest of the description and steps (2) and (3) were the same as those in Example 2.

**Comparative Example 3**

The rest of the description was the same as that in Example 2 except that a conventional acrylic resin binder was used instead of the prefabricated binder.

**Test and data analysis**

In order to verify the performance of the coated separators prepared according to these solutions, the coated separators prepared in Examples 1 to 3 and Comparative Examples 1 to 3 were subjected to a performance test at the same time. The test method was as follows: Each group of coated separators were cut into separator sample sheets with a size of 200 × 100 mm; the separator sample sheets were placed between two pieces of A3 paper; they were put into a drying oven; the temperature of the drying oven was set to 160 °C; the separator sample sheets were taken out after being dried for 1 h; longitudinal and horizontal sizes were measured using an image measuring instrument; the temperature of the oven was set to 170 °C; and the above operating steps were repeated. The heat resistance of the coated separator was determined using the shrinkage rate. Detection data were shown in Table 1 below, and a calculation formula of the shrinkage rate was as follows:

$$\text{Shrinkage\%} = (\text{length (before drying)} - \text{length (after drying)})/\text{length (before drying)} * 100\%$$

A test method for the peel strength of the coated separator was as follows:
Each group of prepared coated separators were respectively cut into separator sample strips with a size of 15 mm × 200 mm by a slitter; the separator sample strips were adhered to a stainless steel plate (the length exceeded half of that of the stainless steel plate) by a 3M double-sided adhesive with a width of 15 mm; after the 3M adhesive was adhered to the steel plate, a roller was used to roll it back and forth twice; the coated surfaces of the sample strips faced the adhesive and was rolled with the roller back and forth for three times (each back-and-forth rolling was lasted for 10 s); the separator sample strips were vertically medially clamped between upper and lower chucks of a tester; a distance between the upper and lower chucks was 100 mm, and a distance from a lower edge of the steel plate to the lower clamp was 1-2 mm; the option "Execute test" on a test software interface was clicked to start the test, with a test speed of 50 mm/min; after the sample strips had been pulled, test data were read from the software interface; and test results were seen in Table 1 below.

Table 1

| Serial number | Heat shrinkage (%) at 160 °C/ 1 h | | Heat shrinkage (%) at 170 °C/ 1 h | | Peel strength (N/m) |
|---|---|---|---|---|---|
| | MD | TD | MD | TD | |
| Example 1 | 1.73 | 1.41 | 1.84 | 1.30 | 103.4 |
| Example 2 | 1.67 | 1.37 | 1.75 | 1.27 | 110.5 |
| Example 3 | 1.71 | 1.42 | 1.80 | 1.31 | 125.1 |
| Comparative Example 1 | 1.77 | 1.43 | 1.93 | 1.49 | 8.2 |
| Comparative Example 2 | 1.94 | 1.67 | 2.03 | 1.57 | 30.0 |
| Comparative Example 3 | / | / | / | / | 60.7 |

As can be seen from the data in Table 1, the coated separators prepared in Examples 1 to 3 according to these solutions have smaller heat shrinkage rates in the horizontal and longitudinal directions after 1 h at 160 °C and 170 °C and are superior to those of the coated separators prepared in Comparative Examples 1 to 3; and their peel strength can reach 100.0 N/m or above. Therefore, it is verified that the coated separators prepared by the solution have excellent heat shrinkage resistance and higher peel strength.

When Comparative Example 1 is compared to Example 2, the prefabricated binder is only the modified acrylic resin, and no poly alpha-methyl cyanoacrylate is added; the heat shrinkage rate of the finally prepared coated separator at 160 °C and 170 °C is lower than that in Example 2, and the peel strength is also reduced. When Comparative Example 2 is compared to Example 2, during preparation of the modified acrylic resin, the butyraldehyde is used instead of the vanillin, so that the heat shrinkage resistance of the finally prepared coated separator and the peel strength of the coating layer are both reduced. When Comparative Example 3 is compared to Example 2, the conventional acrylic resin binder is used instead of the prefabricated binder, the coated separator prepared has obvious heat shrinkage at 160 °C, and the separator is greatly shrunk and has poor heat resistance. Therefore, it is also indicated that the coated membrane prepared by the present invention has better heat shrinkage resistance and higher peel strength.

Finally, it should be noted that: the above descriptions are only preferred examples of the present invention and are not intended to limit the present invention. Although the present invention has been described in detail with reference to the foregoing examples, those skilled in the art can still modify the technical solutions in the foregoing various examples, or equivalently replace partial technical features.

**Claims**

1. A coated separator with high heat resistance and high peel strength, comprising a base membrane, wherein a surface of the base membrane is coated with a ceramic coating layer;

the ceramic coating layer comprises the following raw materials in parts by weight: 30-50 parts of ceramic powder, 0.5-2 parts of a dispersant, 3-7 parts of a prefabricated binder, 0.1-0.5 parts of a wetting agent, and 20-30 parts of high-purity water; and
**characterized in that** the prefabricated binder is a mixture of modified acrylic resin and poly alpha-methyl cyanoacrylate;
the modified acrylic resin is mainly prepared from 2-aminopyrimidine, vanillin, an acrylic monomer, acrylic ester, *o*-bromoacetophenone, and dimethyl azodiisobutyrate through reactions, and
wherein a mass ratio of the modified acrylic resin to the poly alpha-methyl cyanoacrylate is 1: 0.5-1.

2. The coated separator with high heat resistance and high peel strength according to claim 1, wherein

the dispersant is an aqueous polycarboxylate ammonium salt type dispersant, an acrylate copolymer type dispersant and a triethanolamine type dispersant;
the ceramic powder is any one of aluminum oxide powder, boehmite powder, silicon dioxide powder and titanium dioxide powder;
the wetting agent is one or a mixture of two of a polyether organic silicon copolymer surfactant and an alkyne diol modified nonionic surfactant.

3. The coated separator with high heat resistance and high peel strength according to claim 2, wherein the base membrane is a polyethylene membrane or a polypropylene membrane, which has a thickness of 5-9 $\mu$m and a porosity of 40-50%.

4. A preparation method for the coated separator with high heat resistance and high peel strength of claim 1, comprising the following steps:

(1) preparing a prefabricated binder:

S1, preparing modified propylene resin; dissolving 2-aminopyrimidine in an *N,N*-dimethylformamide solvent; adding *o*-bromoacetophenone; mixing and uniformly stirring the materials; adding sodium bicarbonate under a nitrogen atmosphere; uniformly stirring the materials; heating the mixture to 70-75 °C for reaction, and heating the mixture to 75-80 °C for heat preservation and aging; cooling the mixture; adding a catalyst and ammonia water, and heating the mixture to 80-90 °C for reaction; cooling the mixture; adding vanillin; heating the mixture to 75-80 °C for continuous reaction; performing cooling, extracting, washing, concentrating and separating to obtain a compound containing pyrimidine heterocycle;
S2, mixing the compound prepared in S1, an acrylic acid monomer, acrylic ester, deionized water and concentrated sulfuric acid; adding dimethyl azodiisobutyrate at a low temperature; uniformly stirring the materials; heating the mixture to 75-85 °C for reaction; continuing to heat the mixture to 85-90 °C for heat preservation and aging; cooling the mixture; dropwise adding ammonia water to adjust the pH value to obtain modified acrylic resin; and
S3, mixing the modified acrylic resin with poly alpha-methyl cyanoacrylate, and uniformly stirring the mixture to obtain a prefabricated binder;

(2) preparing a ceramic slurry: mixing and stirring a dispersant, high-purity water, ceramic powder, the prefabricated binder and a wetting agent to prepare a ceramic slurry; and
(3) preparing a finished coated separator product with high heat resistance and high peel strength: coating a surface of a base membrane with the ceramic slurry by a roller; drying the surface in an oven; and rolling up, splitting and packaging the base membrane to obtain a finished coated separator product.

5. The preparation method for the coated separator with high heat resistance and high peel strength according to claim 4, comprising the following steps:

(1)preparing a prefabricated binder:

S1, preparing modified propylene resin; dissolving 2-aminopyrimidine in an *N,N*-dimethylformamide solvent; adding o-bromoacetophenone; mixing and uniformly stirring the materials; adding sodium bicarbonate under a nitrogen atmosphere; uniformly stirring the materials; heating the mixture to 70-75 °C for reaction for 3-4 h; performing vacuum removal for 10-20 min under a condition that a vacuum degree is less than or equal to -0.095 mPa; heating the mixture to 75-80 °C for heat preservation and aging for 1-2 h; cooling the mixture to 30-40 °C; adding a cupric iodide catalyst and ammonia water, and heating the mixture to 80-90 °C for reaction for 8-9 h; cooling the mixture to 30-40 °C; adjusting the pH to 4.3-4.7; adding vanillin; heating the mixture to 75-80 °C for continuous reaction for 5-6 h; performing cooling to 30-40 °C; performing extracting with ethyl acetate; performing washing, concentrating and separating to obtain a compound containing pyrimidine heterocycle;

S2, mixing the compound prepared in S1, an acrylic acid monomer, acrylic ester, deionized water and concentrated sulfuric acid; cooling the mixture to 5-10 °C; adding dimethyl azodiisobutyrate; uniformly stirring the materials; heating the mixture to 75-85 °C for reaction for 3-4 h; continuing to heat the mixture to 85-90 °C for heat preservation and aging for 30-40 min; cooling the mixture to 30-40 °C; dropwise adding ammonia water to adjust the pH value to 6.8-7.2 to obtain modified acrylic resin; and

S3, mixing the modified acrylic resin with poly alpha-methyl cyanoacrylate according to a mass ratio of 1: 0.5-1, and uniformly stirring the mixture to obtain a prefabricated binder;

(2) preparing a ceramic slurry: adding 0.5-2 parts of a dispersant to high-purity water, and stirring the materials for 5-10 min; adding 30-50 parts of ceramic powder, and stirring the materials for 30-40 min; adding 3-7 parts of the prefabricated binder, and stirring the materials for 1-1.5 h; adding 0.1-0.5 parts of a wetting agent, and stirring the materials for 30-40 min to prepare a ceramic slurry; and

(3) preparing a finished coated separator product with high heat resistance and high peel strength: coating a surface of a base membrane with the ceramic slurry prepared in step (3) by a 170 to 360-wire anilox roller; drying the surface in an oven; and rolling up, splitting and packaging the base membrane to obtain a finished coated separator product.

## Patentansprüche

1. Beschichteter Separator mit hoher Hitzebeständigkeit und hoher Schälfestigkeit umfassend eine Basismembran, wobei eine Oberfläche der Basismembran mit einer Keramik-Beschichtungsschicht beschichtet ist;

die Keramik-Beschichtungsschicht umfasst die folgenden Rohstoffe nach Gewichtsanteilen: 30-50 Teile Keramikpulver, 0,5-2 Teile eines Dispergiermittels, 3-7 Teile eines vorgefertigten Bindemittels, 0,1-0,5 Teile eines Netzmittels und 20-30 Teile hochreines Wasser; und

**dadurch gekennzeichnet, dass** das vorgefertigte Bindemittel eine Mischung aus modifiziertem Acrylharz und Poly-Alpha-Methylcyanoacrylat ist;

das modifizierte Acrylharz hauptsächlich durch Reaktionen aus 2-Aminopyrimidin, Vanillin, einem Acrylmonomer, Acrylester, o-Bromacetophenon und Dimethyl-Azodiisobutyrat zubereitet wird, und

wobei ein Massenverhältnis des modifizierten Acrylharzes zum Poly-Alpha-Methylcyanoacrylat 1: 0,5-1 ist.

2. Beschichteter Separator mit hoher Hitzebeständigkeit und hoher Schälfestigkeit nach Anspruch 1, wobei

das Dispergiermittel ein wässriges Polycarboxylat-Ammoniumsalz-Dispergiermittel, ein Acrylat-Copolymer-Dispergiermittel und ein Triethanolamin-Dispergiermittel ist;

das Keramikpulver eines der folgenden: Aluminiumoxidpulver, Böhmit-Pulver, Siliziumdioxidpulver und Titandioxid-Pulver ist;

das Netzmittel eine Mischung eine Mischung aus zwei organischen Polyether-Silizium-Tensiden und einem modifizierten nichtionischen Alkindiol-Tensid ist.

3. Beschichteter Separator mit hoher Hitzebeständigkeit und hoher Schälfestigkeit nach Anspruch 2, wobei die Basismembran eine Polyethylen-Membran oder eine Polypropylen-Membran ist, die eine Dicke von 5-9 $\mu$m und eine Porosität von 40-50 % aufweist.

**4.** Zubereitungsverfahren für einen beschichteten Separator mit hoher Hitzebeständigkeit und hoher Schälfestigkeit nach Anspruch 1, umfassend die folgenden Schritte:

(1) Zubereitung eines vorgefertigten Bindemittels:

S1: Zubereiten des modifizierten Polypropylenharzes; Auflösen von 2-Aminopyrimidin in einem N,N-Dimethylformamid-Lösungsmittel,; Hinzufügen von o-Bromoacetophenon; Vermischen und gleichmäßiges Verrühren der Stoffe; Hinzufügen von Natriumbikarbonat unter einer Stickstoffatmosphäre; gleichmäßiges Verrühren der Stoffe; Erhitzen des Gemischs auf 70-75 °C für die Reaktion und Erhitzen des Gemischs auf 75-80 °C für die Hitzeerhaltung und Alterung; Abkühlen des Gemischs; Hinzufügen eines Katalysators und Ammoniakwasser und Erhitzen des Gemischs auf 80-90 °C für die Reaktion; Abkühlen des Gemischs; Hinzufügen von Vanillin; Erhitzen des Gemischs auf 75-80 °C für die kontinuierliche Reaktion; Abkühlen, Extrahieren mit Ethylacetat, Waschen, Konzentrieren und Trennen, um einen Verbundstoff zu erhalten, der einen Pyrimidin-Heterozyklus enthält;

S2: Vermischen des in S1 zubereiteten Verbundstoffes, eines Acrylsäuremonomers, eines Acrylesters, entionisierten Wassers und konzentrierter Schwefelsäure; Hinzufügen von Dimethyl-Azodiisobutyrat bei niedriger Temperatur; gleichmäßiges Verrühren der Stoffe; Erhitzen des Gemischs auf 75-85 °C für die Reaktion; weiteres Erhitzen des Gemischs auf 85-90 °C für die Hitzeerhaltung und Alterung; Abkühlen des Gemischs; tropfenweises Hinzufügen des Ammoniakwassers, um den pH-Wert einzustellen und das modifizierte Acrylharz zu erhalten; und

S3: Vermischen des modifizierten Acrylharzes mit Poly-Alpha-Methylcyanoacrylat und gleichmäßiges Verrühren des Gemischs, um ein vorgefertigtes Bindemittel zu erhalten;

(2) Zubereiten eines Keramikschlickers: Vermischen und Verrühren eines Dispergiermittels, hochreinen Wassers, Keramikpulvers, des vorgefertigten Bindemittels und eines Netzmittels, um einen Keramikschlicker vorzubereiten; und

(3) Zubereiten des fertigen beschichteten Separatorprodukts mit hoher Hitzebeständigkeit und hoher Schälfestigkeit: Beschichten einer Oberfläche einer Basismembran mit einem Keramikschlicker mittels einer Walze in einem Ofen; Aufrollen, Spalten und Verpacken der Basismembran, um ein fertiges beschichtetes Separatorprodukt zu erhalten.

**5.** Zubereitungsverfahren für einen beschichteten Separator mit hoher Hitzebeständigkeit und hoher Schälfestigkeit nach Anspruch 4, umfassend die folgenden Schritte:

(1) Zubereitung eines vorgefertigten Bindemittels:

S1: Zubereiten des modifizierten Polypropylenharzes; Auflösen von 2-Aminopyrimidin in einem N,N-Dimethylformamid-Lösungsmittel,; Hinzufügen von o-Bromoacetophenon; Vermischen und gleichmäßiges Verrühren der Stoffe; Hinzufügen von Natriumbikarbonat unter einer Stickstoffatmosphäre; gleichmäßiges Verrühren der Stoffe; Erhitzen des Gemischs auf 70-75 °C für die Reaktion für eine Dauer von 3-4 h; Durchführen der Vakuumentfernung für 10-20 Min. unter der Bedingung, dass der Vakuumgrad höchstens -0,095 mPa beträgt; Erhitzen des Gemischs auf 75-80 °C für die Hitzeerhaltung und Alterung für eine Dauer von 1-2 h; Abkühlen des Gemischs auf 30-40 °C; Hinzufügen eines Kupfer(I)-iodid-Katalysators und Ammoniakwassers und Erhitzen des Gemischs auf 80-90 °C für die Reaktion für eine Dauer von 8-9 h; Abkühlen des Gemischs auf 30-40 °C; Einstellen des pH-Wertes auf 4,3-4,7; Hinzufügen von Vanillin; Erhitzen des Gemischs auf 75-80 °C für die kontinuierliche Reaktion für eine Dauer von 5-6 h; Abkühlen auf 30-40 °C; Extrahieren mit Ethylacetat, Waschen, Konzentrieren und Trennen, um einen Verbundstoff zu erhalten, der einen Pyrimidin-Heterozyklus enthält;

S2: Vermischen des in S1 zubereiteten Verbundstoffes, eines Acrylsäuremonomers, eines Acrylesters, entionisierten Wassers und konzentrierter Schwefelsäure; Abkühlen des Gemischs auf 5-10 °C; Hinzufügen von Dimethyl-Azodiisobutyrat; gleichmäßiges Verrühren der Stoffe; Erhitzen des Gemischs auf 75-85 °C für die Reaktion für eine Dauer von 3-4 h; weiteres Erhitzen des Gemischs auf 85-75 °C für die Hitzeerhaltung und Alterung für eine Dauer von 30-40 Min.; Abkühlen des Gemischs auf 30-40 °C; tropfenweises Hinzufügen des Ammoniakwassers, um den pH-Wert auf 6,8-7,2 einzustellen und das modifizierte Acrylharz zu erhalten; und

S3: Vermischen des modifizierten Acrylharzes mit Poly-Alpha-Methylcyanoacrylat nach einem Massenverhältnis von 1: 0,5-1, und gleichmäßiges Verrühren des Gemischs, um ein vorgefertigtes Bindemittel zu erhalten;

(2) Vorbereiten eines Keramikschlickers: Hinzufügen von 0,5-2 Teilen eines Dispergiermittels zum hochreinen Wasser, Verrühren der Stoffe für eine Dauer von 5-10 Min.; Hinzufügen von 30-50 Teilen Keramikpulver, Verrühren der Stoffe für eine Dauer von 30-40 Min.; Hinzufügen von 3-7 Teilen des vorgefertigten Bindemittels, Verrühren der Stoffe für eine Dauer von 1-1,5 h; Hinzufügen von 0,1-0,5 Teilen des Netzmittels, Verrühren der Stoffe für eine Dauer von 30-40 Min., um den Keramikschlicker vorzubereiten; und

(3) Vorbereiten des fertigen beschichteten Separatorprodukts mit hoher Hitzebeständigkeit und hoher Schälfestigkeit: Beschichten einer Oberfläche einer Basismembran mit dem in Schritt (3) Keramikschlicker mittels einer Rasterwalze mit 170 bis 360 Drähten; Trocknen der Oberfläche in einem Ofen; Aufrollen, Spalten und Verpacken der Basismembran, um ein fertiges beschichtetes Separatorprodukt zu erhalten.

## Revendications

1. Un séparateur revêtu doté d'une haute résistance à la chaleur et d'une haute résistance au pelage, comprenant une membrane de base, dans lequel une surface de la membrane de base est revêtue d'une couche de revêtement en céramique ;

   la couche de revêtement en céramique comprend les matériaux bruts suivants en parties en poids : 30-50 parties de poudre de céramique, 0,5-2 parties de dispersant, 3-7 parties de liant préfabriqué, 0,1-0,5 parties d'agent mouillant, et 20-30 parties d'eau de haute pureté ; et
   **caractérisé en ce que** le liant préfabriqué est un mélange de résine acrylique modifiée et de poly cyanoacrylate d'alpha-méthyle ;
   la résine acrylique modifiée est principalement préparée à partir de 2-aminopyrimidine, de vanilline, d'un monomère acrylique, d'un ester acrylique, d'o-bromoacétophénone, et d'azodiisobutyrate de diméthyle par réactions, et
   dans lequel le rapport de masse de la résine acrylique modifiée au poly cyanoacrylate d'alpha-méthyle est de 1 : 0,5-1.

2. Un séparateur revêtu doté d'une haute résistance à la chaleur et d'une haute résistance au pelage selon la revendication 1, dans lequel

   le dispersant est un dispersant de type sel de poly carboxylate d'ammonium aqueux, un dispersant de type de type copolymère d'acrylate et un dispersant de type triéthanolamine ;
   la poudre de céramique est un élément parmi la poudre d'oxyde d'aluminium, la poudre de boehmite, la poudre d'oxyde de silicium et la poudre de dioxyde de titane ;
   l'agent mouillant est un élément parmi ou un mélange du tensioactif poly éther de copolymère de silicium organique et du tensioactif non ionique d'alcyne diol modifié.

3. Un séparateur revêtu doté d'une haute résistance à la chaleur et d'une haute résistance au pelage selon la revendication 2, dans lequel la membrane de base est une membrane polyéthylène ou une membrane polypropylène, d'une épaisseur de 5-9 μm et d'une porosité de 40-50%.

4. Un procédé de préparation du séparateur revêtu doté d'une haute résistance à la chaleur et d'une haute résistance au pelage selon la revendication 1, comprenant les étapes suivantes :

   (1) préparer un liant préfabriqué :

   S1, préparer de la résine propylène modifiée ; dissoudre du 2-aminopyrimidine dans un solvant N.N-diméthylformamide ; ajouter du o-bromoacétophènone ; mélanger et agiter uniformément les matériaux ; ajouter du bicarbonate de sodium sous atmosphère d'azote ; agiter uniformément les matériaux ; chauffer le mélange à 70-75 °C pour réaction, et chauffer le mélange à 75-80 °C pour préservation thermique et vieillissement ; refroidir le mélange ; ajouter un catalyseur et de l'eau ammoniaquée, et chauffer le mélange à 80-90 °C pour réaction ; refroidir le mélange ; ajouter de la vanilline ; chauffer le mélange à 75-80 °C pour réaction continue ; effectuer un refroidissement, une extraction, un lavage, une concentration et une séparation pour obtenir un composé contenant un hétérocycle de pyrimidine ;
   S2, mélanger le composé préparé en S1, un monomère acide acrylique, un ester acrylique, de l'eau déionisée et de l'acide sulfurique concentré ; ajouter de l'azodiisobutyrate de diméthyle à basse température ; agiter uniformément les matériaux ; chauffer le mélange à 75-85 °C pour réaction ; continuer de chauffer

**EP 4 175 045 B1**

le mélange à 85-90 °C pour préservation thermique et vieillissement ; refroidir le mélange ; ajouter l'eau ammoniaquée au goutte à goutte pour ajuster la valeur pH afin d'obtenir la résine acrylique modifiée ; et S3, mélanger la résine acrylique modifiée au poly cyanoacrylate d'alpha-méthyle, et mélanger uniformément le mélange pour obtenir le liant préfabriqué ;

(2) préparer une barbotine céramique : mélanger et agiter un dispersant, de l'eau de haute pureté, de la poudre céramique, le liant préfabriqué et un agent mouillant pour préparer la barbotine céramique ; et
(3) préparer un produit de séparateur revêtu fini doté d'une haute résistance à la chaleur et d'une haute résistance au pelage : enduire une surface de membrane de base avec de la barbotine céramique à l'aide d'un rouleau ; sécher la surface dans un four ; et enrouler, fractionner et emballer la membrane de base pour obtenir un produit de séparateur revêtu fini.

5. Un procédé de préparation du séparateur revêtu doté d'une haute résistance à la chaleur et d'une haute résistance au pelage selon la revendication 4, comprenant les étapes suivantes :

(1) préparer un liant préfabriqué :

S1, préparer de la résine propylène modifiée ; dissoudre du 2-aminopyrimidine dans un solvant N.N-diméthylformamide ; ajouter du o-bromoacétophènone ; mélanger et agiter uniformément les matériaux ; ajouter du bicarbonate de sodium sous atmosphère d'azote ; agiter uniformément les matériaux ; chauffer le mélange à 70-75 °C pour réaction durant 3-4 h ; effectuer une élimination sous vide pendant 10-20 min sous condition de degré de vide inférieur ou égal à -0,095 mPa ; chauffer le mélange à 75-80 °C pour préservation thermique et vieillissement durant 1-2 h ; refroidir le mélange à 30-40°C ; ajouter un catalyseur à iodure cuivrique et de l'eau ammoniaquée, et chauffer le mélange à 80-90 °C pour réaction durant 8-9 h; refroidir le mélange à 30-40°C ; ajuster le pH à 4,3-4,7 ; ajouter de la vanilline ; chauffer le mélange à 75-80 °C pour réaction continue durant 5-6 h ; effectuer un refroidissement à 30-40°C, une extraction à l'acétate d'éthyle, un lavage, une concentration et une séparation pour obtenir un composé contenant un hétérocycle de pyrimidine ;
S2, mélanger le composé préparé en S1, un monomère acide acrylique, un ester acrylique, de l'eau déionisée et de l'acide sulfurique concentré ; refroidir le mélange à 5-10°C ; ajouter de l'azodiisobutyrate de diméthyle ; agiter uniformément les matériaux ; chauffer le mélange à 75-85 °C pour réaction durant 3-4 h ; continuer de chauffer le mélange à 85-90 °C pour préservation thermique et vieillissement durant 30-40 min ; refroidir le mélange à 30-40°C ; ajouter l'eau ammoniaquée au goutte à goutte pour ajuster la valeur pH à 6,8-7,2 afin d'obtenir la résine acrylique modifiée ; et
S3, mélanger la résine acrylique modifiée au poly cyanoacrylate d'alpha-méthyle selon un rapport de masse de 1 : 0,5-1, et mélanger uniformément le mélange pour obtenir le liant préfabriqué ;

(2) préparer une barbotine céramique : ajouter 0,5-2 parties de dispersant, de l'eau de haute pureté, et mélanger les matériaux durant 5-10 min ; ajouter 30-50 parties de poudre céramique, et mélanger les matériaux durant 30-40 min ; ajouter 3-7 parties de liant préfabriqué, et mélanger les matériaux durant 1-1,5 h ; ajouter 0,1-0,5 parties d'agent mouillant, et mélanger les matériaux durant 30-40 min pour préparer la barbotine céramique ; et
(3) préparer un produit de séparateur revêtu fini doté d'une haute résistance à la chaleur et d'une haute résistance au pelage : enduire une surface de membrane de base avec la barbotine céramique préparée à l'étape (3) à l'aide d'un rouleau anilox 170-360 ; sécher la surface dans un four ; et enrouler, fractionner et emballer la membrane de base pour obtenir un produit de séparateur revêtu fini.

**EP 4 175 045 B1**

**REFERENCES CITED IN THE DESCRIPTION**

**Patent documents cited in the description**

- CN 106025149 A
- CN 108467503 B
- CN 111682149 A
- CN 112467307 A
- CN 111312967 A
- CN 108807805